# EUROPEAN PATENT APPLICATION

(11) **EP 0 710 543 A1**
(43) Date of publication of application: **08.05.1996**
(21) Application number: 95307767.4
(22) Date of filing: 31.10.1995
(51) Int. Cl.: B32B 5/28, B63B 5/24, E04C 2/20

(54) **Sandwich laminate of fibre-reinforced plastics and closed-cell foam**

(30) Priority: 01.11.1994 GB 19940021929
(71) Applicant: MISSION YACHTS PLC, London SW7 1DT (GB)
(72) Inventor: Azima, Farad, Marlow, Buckinghamshire SL7 2ES (GB); Dunk, Kieron, Cambridgeshire, PE18 9LD (GB)
(74) Representative: Maguire, Peter Albert, et al

(57) **Abstract**

A composite structure (1) **characterised by** an opposed pair of skins (2,3) of fibre-reinforced plastics sandwiching opposed layers (4,5) of closed-cell foamed plastics separated by an intermediate fibre reinforced plastics layer (6).

## Description

The invention relates to a laminate or composite structure (hereinafter composite structure) suitable for forming into a panel and more particularly, but not exclusively, for forming the hull of a water-borne craft such as a yacht.

The hulls of craft such as pleasure yachts and other boats are often constructed from fibre-reinforced plastics, typically glass or carbon reinforced polyester resins.

It is an object of the invention to provide an improved laminated panel structure.

According to the invention, a laminate or composite structure comprises an opposed pair of outer skins of fibre-reinforced plastics sandwiching opposed layers of closed-cell foamed plastics separated by an intermediate fibre layer.

Preferably the intermediate layer is of aramid fibres and preferably the fibres are woven together. The fibres of the intermediate layer may be impregnated into a plastics matrix. The various layers may be bonded together by means of a suitable adhesive or adhesives to form a monolithic structural assembly. Alternatively the panel may be formed layer at a time in conventional boat building fashion over a male mould starting with the inner layer. A generally conventional vacuum bag technique may be used to conform some of the layers, e.g. the foamed plastics layers to the desired shape.

Preferably the closed cell foamed plastics is a material such as polyvinyl chloride. The fibre of the skin layers may be quadraxial glass fibres, that is glass fibres formed into a layer in which the fibres are arranged to extend in a common plane about four equi-angularly spaced axes.

Preferably the inner skin is overlaid by a puncture resistant membrane, e.g. that sold under the Trade Mark 'DIOLEN' which comprises a twisted filament multi-axis polyester fibre layer.

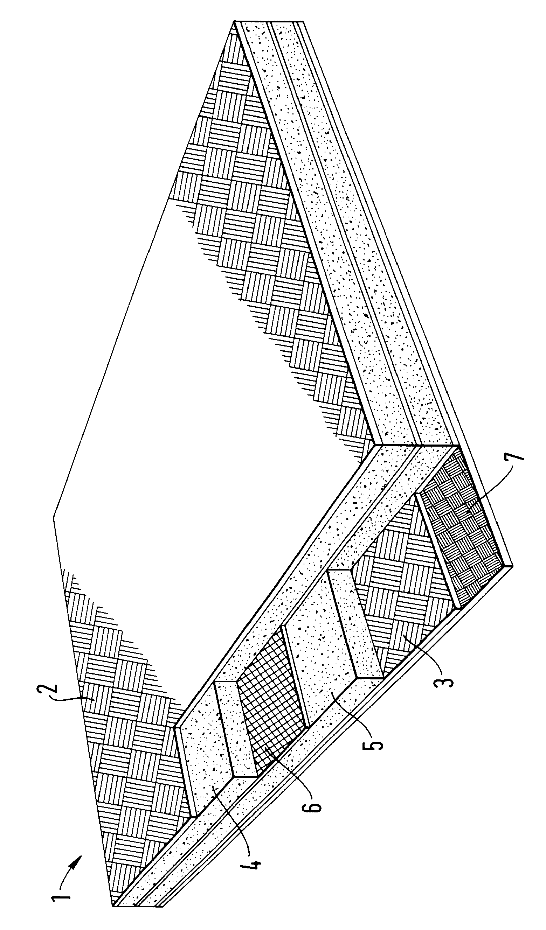

The invention is diagrammatically illustrated by way of example in the accompanying drawing which is a perspective view, broken away to show the various layers of a preferred laminated panel construction.

In the drawing there is shown a laminate or composite structure 1 suitable for forming into the hull of a boat and particularly intended for the hulls of ocean-going cruising yachts.

The structure consists of a pair of spaced apart skins, i.e. outer and inner skins respectively, made from polyester resin reinforced with at least one layer of quadraxial glass fibres, between which are disposed a pair of layers of closed cell foam polyethylene which in turn are separated by an intermediate, generally centrally disposed layer consisting of woven aramid fibres embedded in a plastics matrix such as polyester.

The inner skin is preferably overlaid by a puncture resistant membrane, e.g. such as that sold under the Trade Mark "DIOLEN" which is preferably reinforced by a layer of twisted filament multiaxis polyester fibres.

Preferably the composite structure will be formed layer upon layer by a generally conventional laying-up technique well known in boat building, with the aid, where necessary of a vacuum bag technique.

The use of opposed skins ensures that the structure is balanced against warping due to internal stresses. The positioning of the aramid reinforced layer in the centre of the structure adds strength but maintains the aramid fibres away from the harmful effects of salt water. The puncture resistant membrane provides added protection against holding and thus improves safety. The pair of foam plastics layers provide thermal and acoustic insulation and thus improve the environment in the boat in reducing heat losses and in minimising condensation.

The composite laminate or structure of the invention can be made to have the required strength to form the hull of a yacht and will have improved stiffness and buoyancy compared to conventional fibre-reinforced structures. It is calculated that a hull formed from the laminate of the present invention will be up to around 15% heavier than a conventional hull but unlike a conventional hull, will possess inherently about one half of the buoyancy required to keep the vessel afloat when awash.

Another advantage of a hull made from the laminate of the present invention is in greatly improved thermal and sound insulation so that the on-board cabin environment is improved with lower heating requirements and less condensation with less damage to fittings, equipment, instruments, clothing and the like.

With conventional hulls it is usually necessary to pierce the hull to attach fittings and fixtures. In the case of a hull made with the laminate of the present invention, blocks of a material such as nylon or wood can be incorporated in the laminate during its manufacture e.g. to occupy the thickness of one or more of the internal layers and the blocks can be threaded to accept fasteners by which fixings can be made without the necessity to pierce the hull.

The invention thus provides a laminate or composite structure particularly suitable for marine use.

## Claims

1. A composite structure (1) **characterised by** an opposed pair of skins (2,3) of fibre-reinforced plastics sandwiching opposed layers (4,5) of closed-cell foamed plastics separated by an intermediate fibre reinforced plastics layer (6).

2. A composite structure according to claim 1, **characterised in that** the intermediate layer (6) comprises woven aramid fibre.

3. A composite structure according to claim 1 or claim 2, **characterised in that** the intermediate layer (6) is disposed substantially centrally of the composite structure (1).

4. A composite structure according to any preceding claim, **characterised in that** the fibre of the intermediate layer (6) is impregnated into a polyester plastics matrix.

5. A composite structure according to any preceding claim, **characterised in that** the layers (4,5) of closed cell foamed plastics are of polyvinyl chloride.

6. A composite structure according to any preceding claim, **characterised in that** the fibre reinforcement of the skins (2,3) is of quadraxial glass fibres.

7. A composite structure according to any preceding claim, **characterised in that** one skin (3) is overlaid by a puncture-resistant membrane (7).

8. A composite structure according to claim 7, **characterised in that** the membrane (7) comprises a layer of twisted filament multi-axis polyester fibre.

9. A boat hull **characterised by** a composite structure (1) as claimed in any preceding claim.

10. A boat hull according to claim 9, **characterised in that** the boat is a yacht.
